# EUROPÄISCHE PATENTSCHRIFT

(11) **EP 2 702 302 B1**
(45) Veröffentlichungstag und Bekanntmachung des Hinweises auf die Patenterteilung: **10.08.2016**
(21) Anmeldenummer: 12708128.9
(22) Anmeldetag: 08.03.2012
(51) Int. Cl.: F16K 17/04, F02M 63/00, F16K 15/02

(54) **DRUCKBEGRENZUNGSVENTIL**
PRESSURE RELIEF VALVE
SOUPAPE DE SÉCURITÉ

(30) Priorität: 29.04.2011 DE 102011017765
(43) Veröffentlichungstag der Anmeldung: 05.03.2014
(73) Patentinhaber: Robert Bosch GmbH, 70442 Stuttgart (DE)
(72) Erfinder: GOMOLA, Marek, 627 00 Brno (CZ)
(86) Internationale Anmeldenummer: PCT/EP2012/054015
(87) Internationale Veröffentlichungsnummer: WO 2012/146431

(56) Entgegenhaltungen:
- WO-A1-2004/083695
- DE-A1-102007 016 010
- US-A1- 2002 096 217

## Beschreibung

Die Erfindung betrifft ein Druckbegrenzungsventil, insbesondere für Common-Rail-Systeme nach dem Oberbegriff des Anspruchs 1.

### Stand der Technik

Druckbegrenzungsventile für Common-Rail-Systeme dienen zur Druckbegrenzung des Drucks in einem Hochdruckspeicher einer Common-Rail-Einspritzeinrichtung. Das Druckbegrenzungsventil hat die Aufgabe, den maximalen Rail-Druck im System zu begrenzen, um im Falle eines Fehlers die Systemkomponenten zu schützen. Weiterhin hat das Dreckbegrenzungsventil die Aufgabe, für eine Notfahrt des Kraftfahrzeuges einen Mindestdruck im Hochdruckspeicher (Common-Rail) bereitzustellen, damit das Kraftfahrzeug die Werkstatt mit eigenem Antrieb erreichen kann.

Ein derartiges Druckbegrenzungsventil ist aus WO 2004/083695 A1 bekannt. Dieses Druckbegrenzungsventil weist einen Ventilträger und einen mit dem Ventilträger verbundenen Ventileinsatz auf, wobei im Ventileinsatz ein Ventilkolben gleitbar gelagert ist. Der Ventilkolben wirkt mit einer Ventilsitzfläche auf einen Ventilsitz am Ventileinsatz ein, wobei im geschlossenen Zustand des Druckbegrenzungsventils die Ventilfläche auf dem Ventilsitz aufsitzt. Die Schließkraft des Ventilkolbens wird von einer Druckfeder aufgebracht, die im Ventilträger aufgenommen ist. Das Druckbegrenzungsventil wird in ein Gehäuse eingesetzt, welches einen Hochdruckanschluss zu einem Hochdruckspeicher (Common-Rail) und einen Niederdruckanschluss für eine Rücklaufleitung aufweist. Dabei trennt der Ventilkolben im Ventilsitz eine Hochdruckventilkammer, in der der Hochdruckanschluss mündet, von einer Niederdruckkammer, aus der der Niederdruckanschluss herausführt.

Aufgabe der vorliegenden Erfindung ist es, ein Druckbegrenzungsventil bereitzustellen, bei dem der Öffnungsdruck nicht durch einen bei geschlossenem Ventilkolben sich aufbauenden Leckagedruck reduziert wird.

### Offenbarung der Erfindung

Die Aufgabe der vorliegenden Erfindung wird mit den kennzeichnenden Merkmalen des Anspruchs 1 gelöst. Durch die Ableitung einer sich bei geschlossenem Ventilsitz ausbildenden Leckage in einen Niederdruckraum wird gewährleistet, dass sich in der Ventilkammer, die in der Führungsbohrung zwischen dem Ventilsitz und dem Führungsabschnitt des Ventilkolbens ausgebildet ist, kein Leckagedruck durch sich dort stauende Leckage aufbaut, der als Assistenzdruck gegen den Öffnungsdruck wirkt. Dadurch wird der Öffnungsdruck des Druckbegrenzungsventils nur von der Schließkraft der Schließfeder bestimmt.

Vorteilhafte Weiterbildungen der Erfindung sind durch die Maßnahmen der Unteransprüche möglich.

Der Leckagespalt ist in axialer Richtung von zwei Seiten zwischen Führungsbohrung und Ventilkolben ausgeführt, nämlich von einer ventilkammerseitigen Leckageverbindung und einer niederdruckseitigen Leckageverbindung. Dabei wird die ventilkammerseitige Leckageverbindung von einer radialen Entlastungsnut gebildet, in die eine am Ventilkolben ausgebildete Flachstelle bei geschlossenem Ventilsitz führt. Vorzugsweise weist der Ventilkolben drei gleichmäßig über den Umfang verteilte Flachstellen auf. Die niederdruckseitige Leckageverbindung wird von einem axialen Entlastungskanal gebildet, der die radiale Entlastungsnut mit dem Niederdruckraum verbindet.

Die radiale Entlastungsnut ist zweckmäßigerweise umlaufend an der Innenseite der Führungsbohrung im Bereich des Führungsabschnitts ausgeführt. Der axiale Entlastungskanal wird von einer am Ventilkolben ausgebildeten Flachstelle oder einer Axialnut gebildet.

### Ausführungsbeispiel

Ein Ausführungsbeispiel der Erfindung ist in der Zeichnung dargestellt und in der nachfolgenden Beschreibung näher erläutert.

Es zeigen:
- Figur 1: eine Schnittdarstellung durch ein in ein Gehäuse eingebautes erfindungsgemäßes Druckbegrenzungsventil und
- Figur 2: eine vergrößerte Schnittdarstellung der Ansicht X in Figur 1.

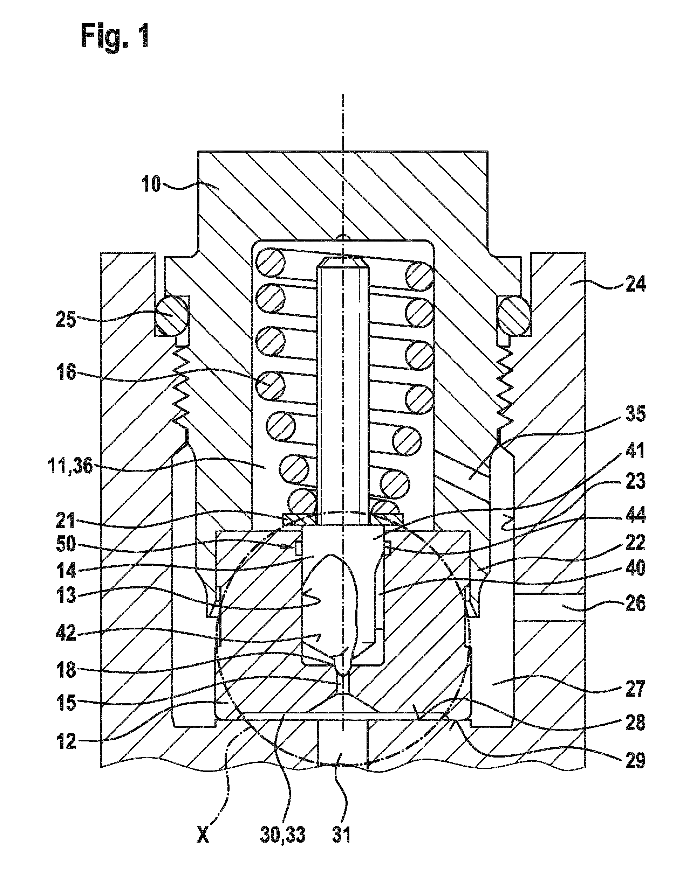

Das Druckbegrenzungsventil in Figur 1 weist einen Ventilträger 10 mit einem Aufnahmeraum 11 für eine Schließfeder 16 und einen Ventileinsatz 12 mit einer Führungsbohrung 13 auf. In der Führungsbohrung 13 ist in einem Führungsabschnitt 41 ein Ventilkolben 14 geführt. Die Führungsbohrung 14 weist am Boden eine Drosselbohrung 15 auf. Im Boden der Führungsbohrung 13 ist um die Drosselbohrung 15 herum ein Ventilsitz 18 ausgebildet, auf den eine am Ventilkolben 14 ausgeführte Ventilsitzfläche 19 bei geschlossenem Druckbegrenzungsventil aufsitzt. Die Schließkraft für den Ventilkolben 14 auf dem Ventilsitz 18 wird von der als Druckfeder ausgebildeten Schließfeder 16 aufgebracht. Die Schließfeder 16 stützt sich dabei ventilsitzseitig an einer Einstellscheibe 21 und an der gegenüberliegenden Seite an einer inneren Stirnfläche des Aufnahmeraums 11 ab. Der Ventilträger 10 umgreift weiterhin mit einem Absatz 22 den Ventileinsatz 12 und ist an dieser Stelle fest mit dem Ventileinsatz 12 verbunden.

Das Druckbegrenzungsventil ist in eine Aufnahme 23 eines Gehäuses 24 eingesetzt. Dazu ist am Ventilträger 10 ein Gewinde ausgeführt, das in ein Gegengewinde an der Aufnahme 23 eingeschraubt ist. Zum dichten Einsetzen des Druckbegrenzungsventils in die Aufnahme 23 des Gehäuses 24 ist ein Dichtring 25 zwischen Ventilträger 10 und Aufnahme 23 verschraubt. In der Aufnahme 23 bildet sich zwischen den Außenwänden des Ventilträgers 10 und des Ventileinsatzes 12 eine Ringkammer 27 aus, die über einen hydraulischen Niederdruckanschluss 26 verfügt, der an eine nicht dargestellte Niederdruck-/Rücklaufleitung angeschlossen ist.

Am Boden der Aufnahme 23 ist eine Planfläche 28 ausgeführt, auf der der Ventileinsatz 12 mit einer Ringfläche 29 aufsitzt. Zwischen Ringfläche 29, Planfläche 28 und dem Ventileinsatz 12 ist ein Spalt 30 ausgebildet, in den ein hydraulischer Hochdruckanschluss 31 mündet, der mit einem nicht dargestellten Hochdruckspeicher (Common-Rail) in Verbindung steht. Der Spalt 30 bildet einen dem Ventilsitz 18 vorgeschalteten Hochdruckraum 33 am Druckbegrenzungsventil aus. In den Spalt 30 bzw. in den Hochdruckraum 33 führt weiterhin die Drosselbohrung 15.

Der Aufnahmeraum 11 ist über einen hydraulischen Verbindungskanal 35 mit der Ringkammer 27 verbunden. Durch den Anschluss der Ringkammer 27 über den Niederdruckanschluss 26 an die Niederdruck/Rücklaufleitung liegt somit auch im Aufnahmeraum 11 der Niederdruck der Niederdruck/Rücklaufleitung an, so dass der Aufnahmeraum 11 einen Niederdruckraum 36 ausbildet.

Oberhalb, d.h. stromauf des Ventilsitzes 18 ist zwischen Führungsbohrung 13 und Ventilkolben 14 eine Ventilkammer 40 ausgebildet, die zur Hochdruckkammer 33 hin über den Ventilsitz 18 geöffnet oder geschlossen wird, und die zum Niederdruckraum 36 hin vom Führungsabschnitt 41 des Ventilkolbens 14 in der Führungsbohrung 13 begrenzt ist. Der Ventilkolben 14 weist mindestens eine Flachstelle 42 auf, vorzugsweise sind drei gleichmäßig über den Umfang verteilte Flachstellen 42 vorhanden. Die Flachstellen 42 sind bis an den Führungsabschnitt 41 geführt. Durch die Flachstellen 42 wird außerdem das Volumen der Ventilkammer 40 vergrößert. Die Ventilkammer 40 wird mittels des Ventilsitzes 18 zur Hochdruckkammer 33 hin geöffnet oder geschlossen. Bei geschlossenem Ventilsitz 18 wird der im Hochdruckspeicher anliegende Druck auf seinem vorliegenden Niveau gehalten. Hebt der Ventilkolben 14 gegen die Schließkraft der Schließfeder 16 ab, gibt er den Ventilsitz 18 frei und gleichzeitig wird über die Flachstellen 42 ein Spalt zwischen Führungsbohrung 13 und Ventilkolben 14 freigegeben, der eine hydraulische Verbindung der Ventilkammer 40 mit dem Niederdruckraum 36 herstellt. Dadurch kann der Hochdruck aus dem Hochdruckraum 33 über die Drosselbohrung 15 und die Ventilammer 40 in den Niederdruckraum 36 abgebaut und von dort in die Niederduck/Rücklaufleitung abgeleitet werden.

Bei geschlossenem Ventilsitz 18 des Ventilkolbens 14 hat sich gezeigt, dass in der Ventilkammer 40 aufgrund von Leckage am Ventilsitz 18 ein Leckagedruck entsteht, der an der gegenüber dem Ventilsitz 18 wesentlich größeren Innenfläche des Ventilkolbens 14 angreift und dort als Assistenzdruck in Öffnungsrichtung des Ventilkolbens 14 gegen die Schließfeder 16 wirkt. Dadurch reduziert sich der von der Ventilfeder 16 bzw. über die Einstellscheibe 21 eingestellte Öffnungsdruck zum Öffnen des Druckbegrenzungsventils.

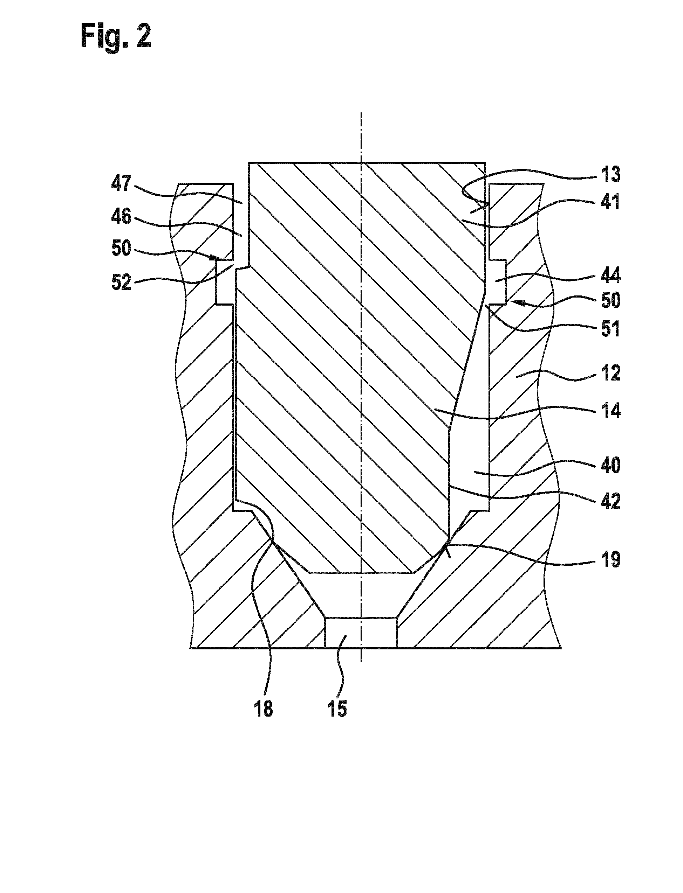

Um hier Abhilfe zu schaffen, ist im Bereich des Führungsabschnitt 41 des Ventilkolbens 14 zwischen Führungsbohrung 13 und Ventilkolben 14 ein Leckagespalt 50 ausgebildet. Der Leckagespalt 50 wird gemäß Figur 2 von einer ventilkammerseitigen Leckageverbindung 51 und einer niederdruckseitigen Leckageverbindung 52 gebildet. Die ventilkammerseitige Leckageverbindung 51 entsteht durch eine in die Innenwand der Führungsbohrung 13 im Führungsabschnitt 41 eingebrachte radiale Entlastungsnut 44, in welche die am Ventilkolben 14 ausgebildete Flachstelle 42 bei geschlossenem Ventilsitz 18 geführt ist. Die niederdruckseitige Leckageverbindung 52 wird von einem am Ventilkolben 14 ausgebildeten axialen Entlastungskanal 46 gebildet, der die radiale Entlastungsnut 44 mit dem Niederdruckraum 36 verbindet. Die radiale Entlastungsnut 44 ist zweckmäßigerweise als umlaufende Nut an der Innenseite der Führungsbohrung 13 ausgeführt. Der axiale Entlastungskanal 46 ist zweckmäßigerweise als eine am Ventilkolben 14 ausgebildete Abflachung oder als eine am Ventilkoben 14 eingebrachte Axialnut 47 ausgebildet.

Durch die ventilkammerseitige Leckageverbindung 51 und die niederdruckseitige Leckageverbindung 52 entsteht eine hydraulische Verbindung als Leckgagespalt 50 zwischen Ventilkammer 40 und Niederdruckraum 36 bei geschlossenem Ventilsitz 18. Die sich in der Ventilkammer 40 sammelnde Leckage kann folglich über die Flachstelle 42 in die Entlastungsnut 44 und von dort über den radialen Entlastungskanal 46 in den Niederdruckraum 36 abfließen. Dadurch baut sich kein von der Leckage ausgeübter Assistenzdruck in der Ventilkammer 40 auf, so dass die Öffnungskraft des Ventilkolbens 14 ausschließlich von der Schließkraft der Schließfeder 16 gebildet wird.

## Patentansprüche

1. Druckbegrenzungsventil, insbesondere für ein Common-Rail-System, mit einem Ventilträger (10), einem mit dem Ventilträger (10) verbundenen Ventileinsatz (12), einem im Ventileinsatz (12) in einer Führungsbohrung (13) gleitbar gelagerten Ventilkolben (14) sowie mit einer Schließfeder (16), die mit einer Schließkraft in Schließrichtung auf den Ventilkolben (14) und der Ventilkolben (14) mittels der Schließkraft auf einen Ventilsitz (18) einwirkt, über welchen eine hydraulische Verbindung über eine Ventilkammer (40) zwischen einem Hochdruckraum (33) und einem Niederdruckraum (36) hergestellt wird, sobald die in Öffnungsrichtung auf den Ventilkolben (14) wirkende hydraulische Kraft die Schließkraft der Schließfeder (16) übersteigt, wobei zwischen der Ventilkammer (40) und dem Niederdruckraum (36) bei geschlossenem Ventilsitz (18) ein Leckagespalt (50) ausgebildet ist, welcher ein Ableiten der Leckage aus der Ventilkammer (40) in den Niederdruckraum (36) ermöglicht, **dadurch gekennzeichnet, dass** der Leckagespalt (50) von einer ventilkammerseitigen Leckageverbindung (51) und einer niederdruckseitigen Leckageverbindung (52) gebildet ist und dass die niederdruckseitige Leckageverbindung (52) von einem axialen Entlastungskanal (46) gebildet ist, welcher eine radiale Entlastungsnut (44) mit dem Niederdruckraum (36) verbindet.

2. Druckbegrenzungsventil nach Anspruch 1, **dadurch gekennzeichnet, dass** der Leckagespalt (50) in einem Führungsabschnitt (41) zwischen Führungsbohrung (13) und Ventilkolben (14) ausgebildet ist.

3. Druckbegrenzungsventil nach Anspruch 1 oder 2, **dadurch gekennzeichnet, dass** die ventilkammerseitige Leckageverbindung (51) von einer radialen Entlastungsnut (44) gebildet ist, in welche mindestens eine am Ventilkolben (14) ausgebildete Flachstelle (42) bei geschlossenem Ventilsitz (18) geführt ist.

4. Druckbegrenzungsventil nach Anspruch 1, **dadurch gekennzeichnet, dass** die radialen Entlastungsnut (44) umlaufend an der Innenseite der Führungsbohrung (13) im Führungsabschnitt (41) ausgebildet ist.

5. Druckbegrenzungsventil nach Anspruch 1 oder 2, **dadurch gekennzeichnet, dass** der axiale Entlastungskanal (46) von einer am Ventilkolben (14) ausgebildeten Abflachung und/oder von einer Axialnut (47) gebildet ist.

6. Druckbegrenzungsventil nach einem der vorhergehenden Ansprüche, **dadurch gekennzeichnet, dass** der Ventilkolben (14) drei gleichmäßig über den Umfang verteilte Flachstellen (42) aufweist.

## Claims

1. Pressure-limiting valve, in particular for a common-rail system, having a valve carrier (10), having a valve insert (12) which is connected to the valve carrier (10), having a valve piston (14) which is mounted in slidable fashion in a valve insert (12) in a guide bore (13), and having a closing spring (16) which acts on the valve piston (14) with a closing force in a closing direction, and the valve piston (14) acts, by way of the closing force, on a valve seat (18) by way of which a hydraulic connection is produced, via a valve chamber (40), between a high-pressure chamber (33) and a low-pressure chamber (36) when the hydraulic force acting on the valve piston (14) in the opening direction exceeds the closing force of the closing spring (16), wherein, when the valve seat (18) is closed, a leakage gap (50) is formed between the valve chamber (40) and the low-pressure chamber (36), which leakage gap allows the leakage from the valve chamber (40) to be discharged into the low-pressure chamber (36), **characterized in that** the leakage gap (50) is formed by a valve-chamber-side leakage connection (51) and by a low-pressure-side leakage connection (52), and **in that** the low-pressure-side leakage connection (52) is formed by an axial relief duct (46) which connects a radial relief groove (44) to the low-pressure chamber (36).

2. Pressure-limiting valve according to Claim 1, **characterized in that** the leakage gap (50) is formed in a guide section (41) between guide bore (13) and valve piston (14).

3. Pressure-limiting valve according to Claim 1 or 2, **characterized in that** the valve-chamber-side leakage connection (51) is formed by a radial relief groove (44) into which, when the valve seat (18) is closed, there is led at least one flattened portion (42) formed on the valve piston (14).

4. Pressure-limiting valve according to Claim 1, **characterized in that** the radial relief groove (44) is formed in encircling fashion on the inner side of the guide bore (13) in the guide section (41).

5. Pressure-limiting valve according to Claim 1 or 2, **characterized in that** the axial relief duct (46) is formed by a flattened portion formed on the valve piston (14) and/or by an axial groove (47).

6. Pressure-limiting valve according to one of the preceding claims, **characterized in that** the valve piston (14) has three flattened portions (42) distributed uniformly over the circumference.

## Revendications

1. Soupape de limitation de pression, en particulier pour un système à rampe commune, comprenant un support de soupape (10), un insert de soupape (12) connecté au support de soupape (10), un piston de soupape (14) supporté de manière coulissante dans l'insert de soupape (12) dans un alésage de guidage (13) ainsi qu'un ressort de fermeture (16) qui agit avec une force de fermeture dans la direction de fermeture sur le piston de soupape (14), le piston de soupape (14) agissant pour sa part au moyen de la force de fermeture sur un siège de soupape (18) par le biais duquel une liaison hydraulique est établie entre un espace haute pression (33) et un espace basse pression (36) par le biais d'une chambre de soupape (40) dès que la force hydraulique agissant dans la direction d'ouverture sur le piston de soupape (14) dépasse la force de fermeture du ressort de fermeture (16), une fente de fuite (50) étant réalisée entre la chambre de soupape (40) et l'espace basse pression (36) lorsque le siège de soupape (18) est fermé, laquelle fente de fuite permet de dévier la fuite hors de la chambre de soupape (40) dans l'espace basse pression (36), **caractérisée en ce que** la fente de fuite (50) est formée par une liaison de fuite (51) du côté de la chambre de soupape et par une liaison de fuite (52) du côté basse pression et **en ce que** la liaison de fuite (52) du côté basse pression est formée par un canal de décharge axial (46) qui relie une rainure de décharge radiale (44) à l'espace basse pression (36).

2. Soupape de limitation de pression selon la revendication 1, **caractérisée en ce que** la fente de fuite (50) est réalisée dans une portion de guidage (41) entre l'alésage de guidage (13) et le piston de soupape (14).

3. Soupape de limitation de pression selon la revendication 1 ou 2, **caractérisée en ce que** la liaison de fuite (51) du côté de la chambre de soupape est formée par une rainure de décharge radiale (44) dans laquelle est guidée au moins une section plate (42) réalisée au niveau du piston de soupape (14) lorsque le siège de soupape (18) est fermé.

4. Soupape de limitation de pression selon la revendication 1, **caractérisée en ce que** la rainure de décharge radiale (44) est réalisée sur la périphérie au niveau du côté interne de l'alésage de guidage (13) dans la portion de guidage (41).

5. Soupape de limitation de pression selon la revendication 1 ou 2, **caractérisée en ce que** le canal de décharge axial (46) est formé par un méplat réalisé au niveau du piston de soupape (14) et/ou par une rainure axiale (47).

6. Soupape de limitation de pression selon l'une quelconque des revendications précédentes, **caractérisée en ce que** le piston de soupape (14) présente trois sections plates (42) réparties uniformément sur la périphérie.
